# EUROPÄISCHE PATENTANMELDUNG

(11) **EP 2 284 123 A1**
(43) Veröffentlichungstag der Anmeldung: **16.02.2011**
(21) Anmeldenummer: 09075333.6
(22) Anmeldetag: 24.07.2009
(51) Int. Cl.: C01B 31/02

(54) **Verfahren zur Entfernung von Verunreinigungen aus nanostrukturiertem Kohlenstoffmaterial und gereinigtes nanostrukturiertes Kohlenstoffmaterial**

(71) Anmelder: BAM Bundesanstalt für Materialforschung und -prüfung, 12205 Berlin (DE)
(72) Erfinder: Mach, Reinard, 13059 Berlin (DE); Oleszak, Franz, 16727 Oberkrämer (DE); Meyer-Plath, Asmus, 14471 Potsdam (DE); Maneck, Heinz-Eberhard, 15745 Wildau (DE)
(74) Vertreter: Pfenning, Meinig & Partner GbR

(57) **Zusammenfassung**

Die Erfindung betrifft Verfahren zur Entfernung von Verunreinigungen aus nanostrukturiertem Kohlenstoffmaterial und gereinigtes nanostrukturiertes Kohlenstoffmaterial. Dadurch, dass graphitisches, teilgraphitisches oder graphitierbares nanostrukturiertes Kohlenstoffmaterial in einem thermischen Plasma (8), in dem die Temperatur eines Prozessgases vorteilhaft mindestens 3350 K beträgt, behandelt und anschließend vom Prozessgas getrennt wird, wird ein Metallgehalt des nanostrukturierten Kohlenstoffmaterials (5) vorteilhaft innerhalb von weniger als 100 ms um mindestens 1% reduziert, wobei entfernte metallhaltige Verunreinigungen zumindest teilweise nach dem Trennen mit dem Prozessgas abtransportiert werden.

## Beschreibung

Die Erfindung betrifft ein Verfahren zur Entfernung von metallischen Verunreinigungen aus nanostrukturierten Kohlenstoffmaterialien sowie derart gereinigtes nanostruktruriertes Kohlenstoffmaterial.

Nanostrukturierte Kohlenstoffmaterialien wie Kohlenstoffnanoröhren und Kohlenstoffnanofasern, haben eine zunehmende Bedeutung in verschiedenen Anwendungsgebieten. Beispielsweise werden derartige Materialien zurzeit für Faserverbundwerkstoffe verwendet. Bei diesen führen sie zu einer deutlichen Verbesserung der elektrischen, thermischen und/oder mechanischen Eigenschaften. Außerdem wird an einer Vielzahl von Anwendungsmöglichkeiten in der Halbleitertechnik und in der Medizintechnik gearbeitet.

Bei der Herstellung von nanostrukturierten Kohlenstoffmaterialien werden üblicherweise metallische Katalysatoren verwendet. Die erzeugten nanostrukturierten Materialien weisen daher meist Verunreinigungen durch Katalysatormetalle auf, welche die Eigenschaften des nanostrukturierten Kohlenstoffmaterials in unerwünschter Weise verändern können. Beispielsweise können diese Verunreinigungen die Leitfähigkeit beeinflussen, einen katalytischen Abbau von in einem Verbundwerkstoff enthaltenen Polymeren auslösen oder eine Funktionalisierung des nanostrukturierten Kohlenstoffmaterials stören. Es kommt erschwerend hinzu, dass als Katalysatormetalle oft Metalle verwendet werden, die toxisch sind oder unter dem Verdacht stehen, eine karzinogene Wirkung zu haben. Dies verringert stark die Anwendungsmöglichkeiten derartiger Materialien.

Nach dem Stand der Technik sind bereits verschiedene Möglichkeiten zur Entfernung metallischer Verunreinigungen aus nanostrukturierten Kohlenstoffmaterialien bekannt.

Das zurzeit am häufigsten verwendete Verfahren beruht auf einer Reinigung der nanostrukturierten Kohlenstoffmaterialien durch mineralische Säuren und/oder Säuregemischen. Diese oxidieren die Katalysatormetalle, so dass wasserlösliche Metallverbindungen entstehen. Diese müssen in einen nachfolgenden Waschschritt entfernt werden. Anschließend muss das so gereinigte nanostrukturierte Kohlenstoffmaterial getrocknet werden. Ein Nachteil dieses Verfahrens ist der hohe Material-, Energie- und Zeitaufwand, der bei Durchführung des Verfahrens entsteht. Es werden erhebliche Mengen Säure und Waschwasser verwendet, so dass nicht nur Materialkosten, sondern auch erhebliche Entsorgungskosten entstehen. Auch der Trocknungsschritt verursacht erhebliche Kosten, insbesondere da sich, abhängig vom nanostrukturierten Material, eine erhebliche Menge Wasser in dem Material befinden kann, weshalb hohe Energiekosten bei der Trocknung entstehen. Weiterhin ist es nachteilhaft, dass dieses Verfahren zu Materialverlust durch Abrieb und Oxidation sowie zu strukturellen Schädigungen führt. Dies ist insbesondere bei der Reinigung von Nanostrukturen mit hohem Aspektverhältnis nachteilig, da deren Aspektverhältnis durch die Beschädigungen verkleinert wird.

Weiterhin ist es nach dem Stand der Technik bekannt, nanostrukturiertes Kohlenstoffmaterial, analog zur Reinigung von Graphit, einer Hochtemperaturbehandlung zu unterziehen. Hierzu wird das nanostrukturierte Kohlenstoffmaterial in Form einer Schüttung in einen Ofen gegeben und unter einer Inertgasatmosphäre auf etwa 2000 bis 3000 K erhitzt. Die Dauer des Reinigungsvorgangs ist abhängig von der Schütthöhe und liegt zwischen mehreren Minuten und mehreren Stunden. Aufgrund der langen Behandlungsdauer in Kombination mit der Behandlungstemperatur entstehen hohe Energiekosten. Außerdem ist die hohe Behandlungsdauer hinsichtlich einer erzielbaren Durchsatzmenge nachteilig.

Des Weiteren haben beide nach dem Stand der Technik bekannten Verfahren den Nachteil, dass ein kontinuierlicher Betrieb nicht oder nur schwierig möglich scheint.

Aufgabe der Erfindung ist es somit ein Verfahren zur Reinigung von nanostrukturiertem Kohlenstoffmaterial zu entwickeln, welches eine günstigere Reinigung ermöglicht, wobei die Struktur des nanostrukturierten Kohlenstoffmaterials möglichst vollständig erhalten bleiben soll. Weiterhin ist es eine Aufgabe der Erfindung nanostrukturiertes Kohlenstoffmaterial vorzuschlagen, dass aufgrund der günstigen Reinigung bei einer im Vergleich zum Stand der Technik hohen Reinheit zugleich günstig bereitgestellt werden kann und welches außerdem eine vorteilhaft gut erhaltene Struktur aufweist.

Diese Aufgabe wird durch ein Verfahren nach Anspruch 1 gelöst. Vorteilhafte Weiterbildungen werden in den abhängigen Ansprüchen genannt.

Das erfindungsgemäße Verfahren zur Entfernung von metallhaltigen Verunreinigungen aus einem nanostrukturierten Kohlenstoffmaterial, dass eine graphitische , teilgraphitische oder graphitierbare Struktur hat, sieht das Einbringen eines nanostrukturierten Kohlenstoffmaterials, welches metallhaltige Verunreinigungen aufweist und welches vereinzelt oder in agglomerierter Form vorliegen kann, in ein thermisches Plasma vor.

Unter "nanostrukturiert" wird hier verstanden, dass ein entsprechendes Material aufgrund einer Strukturierung die zumindest in eine Raumrichtung Strukturgrößen von unter einem Mikrometer aufweist, deutlich andere Eigenschaften, wie beispielsweise Zugfestigkeit, Elastizität, Leitfähigkeit oder ähnliches, aufweist als Kohlenstoff in amorpher Form oder in einem makroskopischen Kristall.

In dem thermischen Plasma, beträgt die Temperatur des Prozessgases vorzugsweise mindestens 3350 K. Nach dem Passieren des Plasmas wird ein nanostrukturiertes Kohlenstoffmaterial mit reduziertem Metallgehalt gefunden.

Schlussendlich wird das nanostrukturierte Kohlenstoffmaterial vom Prozessgas getrennt, wobei die entfernten metallhaltigen Verunreinigungen vorteilhaft zumindest teilweise nach dem Trennen mit dem Prozessgas abtransportiert werden. Dies ist insbesondere möglich, indem eine Trennung vorgenommen wird während das Prozessgas vorteilhaft noch heiß und insbesondere noch heißer als der Siedepunkt einer meistvorkommenden metallischen Verunreinigung ist.

Durch die Verwendung eines thermischen Plasmas sind vorteilhaft hohe Aufheizraten möglich. Aufgrund der Ausbildung des Materials als nanostrukturiertes Material können Verunreinigungen deutlich schneller entweichen, wodurch kürzere Verweilzeiten des nanostrukturierten Materials im heißen Prozessgasmöglich werden. Es werden dabei sowohl in der Struktur angelagerte als auch an der Oberfläche befindliche Verunreinigungen entfernt. Diese Wirkung wird überraschend dadurch ermöglicht, dass Agglomerate von nanostrukturierten Kohlenstoffmaterialien hinreichend porös sind. Außerdem wird das Entweichen dadurch beschleunigt, dass hohe Temperaturen gewählt werden können, da überraschender Weise selbst sehr hohe Temperaturen zu keiner wesentlichen strukturellen Schädigung des nanostrukturierten Kohlenstoffmaterials führen. Vorteilhaft ist es somit möglich innerhalb von weniger als 100ms, insbesondere innerhalb von 1 bis 10 ms, mindestens 1% der metallhaltigen Verunreinigungen zu entfernen.

Durch die mögliche kurze Behandlungsdauer kann dieses Reinigungsverfahren wesentlich energiesparender als Verfahren nach dem Stand der Technik durchgeführt werden, wobei größere Durchsatzmengen möglich sind. Außerdem werden keine Säuren oder ähnliches benötigt, sondern nur ein Prozessgas, wobei dieses zurück gewonnen werden kann. Ein weiterer Vorteil gegenüber Verfahren nach dem Stand der Technik ist, dass die Struktur des nanostrukturierten Materials besser erhalten wird und weniger Verlust durch Abrieb oder Oxidation auftritt.

Vorteilhaft ist es, wenn beim Entfernen der Verunreinigungen des nanostrukturierten Materials zugleich eine Strukturverbesserung des Materials erreicht wird. Eine solche kann insbesondere in einer Erhöhung des Graphitierungsgrades oder der Oxidationsbeständigkeit bestehen.

Um einen besonders guten Erhalt der Struktur zu erreichen kann das Prozessgas Stickstoff oder ein Edelgas, wie Helium, Neon, Argon, Krypton oder Xenon enthalten. Um die Reinigungswirkung zu verbessern kann es vorteilhaft sein ein Reaktivgas oder ein Gemisch aus einem Reaktivgas und einem Inertgas als Prozessgas zu verwenden.

Das Reaktivgas kann dabei vorteilhaft abhängig von der zu entfernenden Verunreinigung gewählt werden, wobei eine zu entfernende Verunreinigung vorteilhaft vor der Entfernung bestimmt wird oder aus dem Syntheseverfahren des nanostrukturierten Kohlenstoffmaterials bekannt ist.

Insbesondere kann als Reaktivgas ein wasserstoffhaltiges Gas verwendet werden, welches Metalloxide reduzieren kann oder mit den metallhaltigen Verunreinigungen zu Metallhydriden reagieren kann. Dies kann insbesondere ausgesprochen vorteilhaft sein, wenn die metallhaltige Verunreinigung zumindest teilweise aus einem Metalloxid besteht, wobei das Metalloxid einen deutlich höheren Siedepunkt hat als das entsprechende Metall.

Ebenfalls kann es hilfreich sein, ein Reaktivgas zu verwenden welches zur Gasphasenoxidation der Verunreinigungen geeignet ist. Insbesondere kann als Prozessgas ein sauerstoffhaltiges Gas wie O₂, CO oder CO₂ und/oder ein wasserstoff- und sauerstoffhaltiges Gas wie H₂O oder H₂O₂ verwendet werden. Abhängig von der vorliegenden metallhaltigen Verunreinigung kann hierdurch die Reinigungsleistung gesteigert werden.

Eine weitere Gruppe von Reaktivgasen, die vorteilhaft verwendet werden kann sind halogenhaltige Gase. Beispiele für jodhaltige Gase sind I₂, HI und HCl. Ebenso können bromhaltige Gase wie Br₂ HBr HCBr, verwendet werden. Außerdem kann auch die Verwendung von chlorhaltigen Gasen wie Cl₂, HCl oder HCCl₃ oder von fluorhaltigen Gasen wie F₂, CF₄, SF₆, CHF₃, C_{w}HₓCl_{y}F_{z} vorteilhaft sein. Durch solche Reaktivgase erzeugte Metallhalogenide können ebenfalls einen niedrigeren Siedepunkt haben als die ursprünglich vorliegende Verunreinigung.

Vorteilhaft werden durch dieses Verfahren katalytisch hergestellte nanostrukturierte Kohlenstoffmaterialien gereinigt. Insbesondere können teilweise geschlossene Graphenstrukturen, wie ein-, doppel- oder mehrwandige Kohlenstoffnanoröhren, Nanobuds, Nanocones oder Nanohorns gereinigt werden. Dadurch dass diese Strukturen nur teilweise geschlossen sind, können enthaltene metallische Verunreinigungen besonders gut entweichen, während eine Säurebehandlung mit einer flüssigen Säure, aufgrund des oft hohen Aspektverhältnisses (Länge/Durchmesser) der Strukturen zumeist ausgesprochen zeitaufwändig wäre.

Außerdem können auch Nanofasern, insbesondere Kohlenstoff-Nanofasern und graphitische Kohlenstoff-Nanofasern, vorteilhaft gereinigt werden. Des Weiteren kann fremdatomdotiertes bzw. fremdatomhaltiges nanostrukturiertes Kohlenstoffmaterial, wie beispielsweise fremdatomdotierte Kohlenstoffnanotubes, gereinigt werden.

Selbstverständlich ist dies keine abschließende Liste der behandelbaren Materialien. Auch andere durch einen katalytischen Prozess synthetisierte nanostrukturierte oder nanoskalierte Kohlenstoffmaterialien können gereinigt werden. Wesentlich ist nur, dass sie hinreichend temperaturresistent sind, und dass die Verunreinigungen metallhaltig sind.

Es ist nicht einmal zwingend, dass das nanostrukturierte Material ein durch ein durch ein katalytischen Prozess synthetisiertes Material ist. Auch andere Materialien, wie beispielsweise aus natürlichen oder synthetischen Rohstoffen hergestellte nanoskalige Graphite oder Graphene die metallhaltige Verunreinigungen aufweisen, können gereinigt werden.

Vorteilhaft kann das nanostrukturierte Kohlenstoffmaterial als Granulat oder Pulver vorliegen. Insbesondere ist es vorteilhaft wenn das nanostrukturierte Material porös ist, wobei eine Schüttdichte und/oder Agglomeratdichte des nanostrukturierten Kohlenstoffmaterials kleiner als 2,5 g/cm³, vorteilhaft kleiner als 0,5 g/cm³, besonders vorteilhaft kleiner als 0,2 g/cm³ ist. Hierdurch ist zum einen ein besonders optimaler Wärmeübertrag vom Prozessgas auf das Material und zum anderen ein besonders zügiges Entweichen der Verunreinigungen möglich.

Außerdem ist es vorteilhaft, wenn das nanostrukturierte Kohlenstoffmaterial vor dem Einbringen in das Plasma durch das Prozessgas fluidisiert wird. Hierdurch ist ein optimaler Wärmeübertrag vom Prozessgas auf das nanostrukturierte Material möglich. Eine optimale Fluidisierung des nanostrukturierten Kohlenstoffmaterials wird erreicht, wenn eine Strömungsgeschwindigkeit des Prozessgases mehr als doppelt so hoch ist wie die Mindestfluidisierungsgeschwindigkeit der größten vorkommenden Agglomerate des nanostrukturierten Kohlenstoffmaterials.

Das thermische Plasma kann vorteilhaft bei Normaldruck betrieben werden. Hierdurch ist die Durchführung des Verfahrens vorteilhaft einfach. Es ist jedoch auch möglich die Reinigungsleistung durch Änderung des Prozessgasdrucks zu optimieren. Abhängig von den übrigen Parametern, insbesondere Prozessgas, Temperatur, Art und Form des nanostrukturierten Materials, kann hierbei ein Unter- oder Überdruck vorteilhaft sein.

Das Plasma kann vorteilhaft durch ein Hochfrequenzplasma gebildet werden, dass insbesondere durch eine Frequenz zwischen 100 kHz und 10 MHz, zwischen 10 MHz und 300 MHz oder zwischen 300 MHz und 300 GHz angeregt werden kann.

Alternativ ist es möglich das Plasma durch einen Lichtbogen, durch ein Gleichstromplasma oder durch ein Wechselstromplasma mit einer Frequenz zwischen 0 und 100 kHz zu erzeugen. Auch die Verwendung eines laserinduzierten Plasmas ist möglich.

Eine Temperatur des Prozessgases im Plasma beträgt vorteilhaft über 3350° K, besonders vorteilhaft über 6000 K, insbesondere 10000 K. Durch die vorteilhaft hohe Temperatur werden die metallhaltigen Verunreinigungen besonders effizient in die Gasphase überführt wobei eine Rekondensation der Verunreinigungen auf dem nanostrukturierten Kohlenstoffmaterial besonders effizient verhindert wird.

Die Leistungsdichte des Plasmas beträgt vorteilhaft mindestens 5 W/cm³, besonders vorteilhaft mindestens 10 W/cm³, insbesondere 30 W/cm³. Hierdurch sind vorteilhaft hohe Aufheizraten möglich.

In einer bevorzugten Ausführungsform des Verfahrens wird das nanostrukturierte Kohlenstoffmaterial kontinuierlich in das Plasma eingebracht und kontinuierlich vom Prozessgas getrennt. Hierdurch kann das Verfahren bevorzugt direkt im Anschluss an eine Synthese des nanostrukturierten Kohlenstoffmaterials, die vorteilhaft ebenfalls kontinuierlich durchführbar ist oder zumindest eine kurze Prozesszykluszeit hat, durchgeführt werden. Hierdurch entfällt die Notwendigkeit einer zwischenlagerung des nanostrukturierten Kohlenstoffmaterials zwischen Synthese und Reinigung.

Eine vorteilhafte Möglichkeit zur kontinuierlichen Trennung des nanostrukturierten Kohlenstoffmaterials vom Prozessgas ist es, eine Strömungsrichtung des Prozessgases zu ändern wobei das nanostrukturierte Kohlenstoffmaterial aus einem Prozessgasstrom ausfällt. Dies ist beispielsweise in einem Zyklon besonders effizient möglich.

Weiterhin ist es vorteilhaft, einen nachfolgenden Waschschritt vorzusehen, bei dem durch eine chemische Reaktion des Prozessgases mit den metallhaltigen Verunreinigungen gebildete lösliche Verunreinigungen, die insbesondere als Metallhalogene, Metallhydroxide, Metallhydrate und/oder Metalloxide bzw. Metallmischoxide ausgebildet sein können, aus dem nanostrukturierten Material ausgewaschen werden. Dieser Waschschritt kann durch Einwirkung von Ultraschall unterstützt werden.

Im Folgenden wird das erfindungsgemäße Verfahren anhand einiger Ausführungsbeispiele genauer erläutert.
Es zeigen
- Fig. 1: eine Anlage zur Durchführung des erfin- dungsgemäßen Verfahrens während des Be- triebs und
- Fig. 2: eine weitere Anlage zur Durchführung des erfindungsgemäßen Verfahrens während des Betriebs.

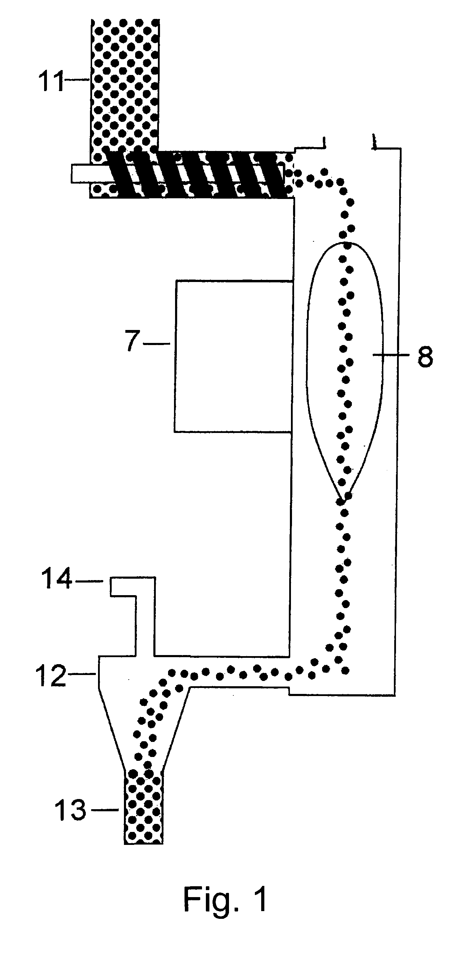

In Figur 1 ist eine Förderanlage 1 für einen fluidisierbaren Feststoff gezeigt, in die auf einer Eingangsseite 2 durch einen Filter 3 78 Liter Argon pro Minute mit Normaldruck eingeleitet werden. Durch eine Förderschnecke 4 werden poröse Agglomerate aus mehrwandigen Kohlenstoffnanoröhren, die in Form eines Granulates 5 in einem Vorratsbehälter 6 vorliegen und mit Katalysatormetallen verunreinigt sind, mit einer Fördergeschwindigkeit von 100 g pro Stunde eingebracht. Der Filter 3 verhindert hierbei ein Vordringen der Kohlenstoffnanoröhren in die Gaszuführung. Die Schüttdichte des Granulates 5 beträgt zwischen 0,13 und 0,15 g/cm³. Die Größe der einzelnen Agglomerate liegt zwischen 0,1 und 1 mm. Das eingebrachte Granulat wird durch den Gasstrom fluidisiert.

Das so fluidisierte Granulat wird durch eine von einer Plasmaquelle 7 angeregte Plasmazone 8 hindurch geleitet. Dabei ist es unerheblich, ob der Gasstrom gegen die Schwerkraft, mit der Schwerkraft oder horizontal gerichtet ist. Die Plasmaquelle 7 ist als Hochfrequenzplasmaquelle ausgebildet. Das Plasma 8 wird mit einer Frequenz von 13,56 MHz angeregt, wobei eine Gesamtleistung von 5 kW eingestrahlt wird. Da Argon eine Wärmekapazität von 0,52 J/g/K aufweist und eine Durchflussmenge von 78 Litern pro Minute etwa 2,3 Gramm pro Sekunde entspricht, wird das Prozessgas um etwa 4200 K erhitzt.

Durch den Kontakt mit dem heißen Prozessgas dampfen metallische Verunreinigungen aus den Kohlenstoffnanoröhren aus bzw. von ihrer Oberfläche ab. Durch das heiße Prozessgas können diese nicht erneut auf den über die Verdampfungstemperatur erhitzten Kohlenstoffnanoröhren kondensieren. Die Agglomerate aus Kohlenstoffnanoröhren fallen bei einer Richtungsänderung des Prozessgasstroms aus diesem aus und werden in einem Sammelbehälter 10 aufgefangen. Um zu verhindern, dass kleinere Agglomerate in das Abgassystem gelangen können wird ein weiterer Filter 9 verwendet. Die so gereinigten Agglomerate aus Kohlenstoffnanoröhren haben einen etwa 5 % geringeren Metallgehalt als ungereinigte Kohlenstoffnanoröhren.

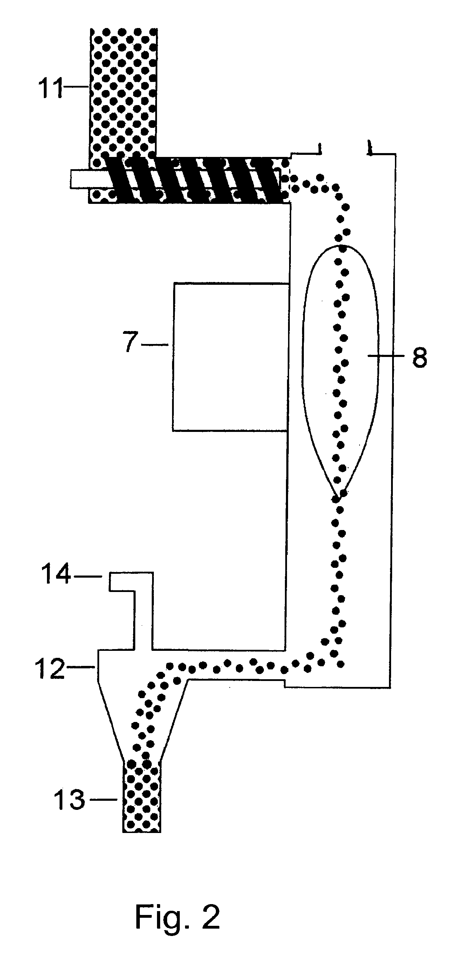

In Figur 2 ist ein zweites Ausführungsbeispiel gezeigt. Die Einbringung findet auch hier durch eine Förderschnecke statt. Jedoch werden die Kohlenstoffnanoröhren, die identisch zu denen aus dem ersten Ausführungsbeispiel sind, aus einem Rohr 11 heraus gefördert, welches direkt mit einer nicht dargestellten Syntheseanlage verbunden ist. In diesem Ausführungsbeispiel wird als Prozessgas ein Gemisch aus 78 Litern pro Minute Argon und 2,5 Litern pro Minute Stickstoff verwendet. Das Plasma wird mit einer Frequenz von 4 MHz und einer Leistung von 12 kW angeregt.

Durch die höhere Leistung des Plasmas und die somit höhere Temperatur, in Kombination mit der Beimengung von Stickstoff wird eine verbesserte Reinigung erzielt, so dass der Metallgehalt der so gereinigten Kohlenstoffnanoröhren gegenüber unbehandelten Kohlenstoffnanoröhren um etwa 20 % reduziert ist. Eine Trennung des nanostrukturierten Materials findet durch einen Zyklon 12 statt. Das so abgetrennte Material wird durch ein weiteres Rohr 13 beispielsweise an eine Abfüllanlage weitergeleitet, während das Prozessgas durch ein weiteren Filter 14 geleitet und Anschließend zurück gewonnen und gereinigt wird.

In einem dritten Ausführungsbeispiel wird ebenfalls die in Figur 2 gezeigte Anlage verwendet. Der einzige Unterschied zum zweiten Ausführungsbeispiel besteht darin, dass statt Stickstoff eine entsprechende Menge Wasserstoff im Prozessgasgemisch enthalten ist. Hierdurch wird der Reinigungseffekt deutlich verbessert, sodass in den gereinigten Kohlenstoffnanoröhren nur noch 47 % des Metallgehalts von ungereinigten Kohlenstoffnanoröhren enthalten ist.

In einem vierten Ausführungsbeispiel wird das Plasma mit einer Frequenz von 4 MHz und einer Leistung von 11 kW betrieben. Als Prozessgas wird ein Gemisch aus 78 Litern pro Minute Argon mit 1,8 Litern pro Minute Chlorwasserstoff verwendet. Die Reinigungswirkung ist hierdurch weiter verbessert, sodass nur noch 30 % des Ausgangsmetallgehalts nachweisbar sind.

## Patentansprüche

1. Verfahren zur Entfernung von metallhaltigen Verunreinigu8ngen aus einem nanostrukturierten Kohlenstoffmaterial (5), **dadurch gekennzeichnet, dass** das nanostrukturierte Kohlenstoffmaterial in einem thermischen Plasma (8) eines Prozessgases behandelt und anschließend von dem Prozessgas getrennt wird.

2. Verfahren nach Anspruch 1, **dadurch gekennzeichnet, dass** das nanostrukturierte Kohlenstoffmaterial graphitisch, teilgraphitisch oder graphitierbar ist und dass bei der Reinigung zugleich ein Graphitierungsgrad oder eine Oxidationsbeständigkeit des nanostrukturierten Kohlenstoffmaterials (5) ausgebildet werden kann.

3. Verfahren nach Anspruch 1 oder 2, **dadurch gekennzeichnet, dass** das Prozessgas Stickstoff und/oder ein Edelgas wie He, Ne, Ar, Kr, Xe enthält.

4. Verfahren nach einem der vorherigen Ansprüche, **dadurch gekennzeichnet, dass** das Prozessgas ein Reaktivgas, vorteilhaft ein zur Reduktion der metallischen Verunreinigungen geeignetes Gas, insbesondere ein wasserstoffhaltiges Prozessgas, und/oder vorteilhaft ein zur Oxidation geeignetes Gas, insbesondere O₂, CO oder CO₂ und/oder insbesondere ein wasserstoff- und sauerstoffhaltiges Gas wie H₂O oder H₂O₂, und/oder vorteilhaft ein zum Erzeugen von Metallhalogeniden geeignetes Gas, insbesondere ein bromhaltiges Gas wie Br₂, HBr, HCBr₃ und/oder ein jodhaltiges Gas wie I₂, HI oder HCl₃ und/oder ein chlorhaltiges Gas wie Cl₂ HCl oder HCCl₃ und/oder ein fluorhaltiges Gas wie F₂, SF₆, CF₄, CHF₃ oder C_{w}HₓCl_{y}F_{z} enthält.

5. Verfahren nach einem der vorherigen Ansprüche, **dadurch gekennzeichnet, dass** als nanostrukturiertes Kohlenstoffmaterial ein katalytisch hergestelltes Material verwendet wird, welches vorteilhaft als ein-, doppel- oder mehrwandige Kohlenstoffnanoröhren, als Nanobuds, Nanocones oder Nanohorns ausgebildet ist oder ebenso vorteilhaft als Nanofasern, insbesondere KohlenstoffNanofasern oder graphitische KohlenstoffNanofasern, oder ebenso besonders vorteilhaft als fremdatomdotierte teilweise geschlossene Graphenstrukturen oder Nanofasern, insbesondere als fremdatomdotierte Kohlenstoffnanotubes.

6. Verfahren nach einem der vorherigen Ansprüche, **dadurch gekennzeichnet, dass** als nanostrukturiertes Kohlenstoffmaterial (5) ein Material verwendet wird, welches durch Verunreinigungen eines Ausgangsmaterials, durch den Herstellungsprozess oder durch nachfolgende Bearbeitungsschritte metallhaltige Verunreinigungen aufweist, wobei dieses insbesondere als nanoskalige Graphite oder Graphene ausgebildet sein kann.

7. Verfahren nach einem der vorherigen Ansprüche, **dadurch gekennzeichnet, dass** das nanostrukturierte Material (5) als ein Granulat oder Pulver vorliegt, wobei dieses vorteilhaft porös ist.

8. Verfahren nach einem der vorherigen Ansprüche, **dadurch gekennzeichnet, dass** das nanostrukturierte Kohlenstoffmaterial (5) vor dem Einbringen in das thermische Plasma in einem Gas oder durch das Prozessgas fluidisiert wird.

9. Verfahren nach einem der vorherigen Ansprüche, **dadurch gekennzeichnet, dass** das thermische Plasma durch einen Lichtbogen, ein Gleichstromplasma oder ein Wechselstromplasma erzeugt wird, wobei zum Betrieb ein elektrischer Strom mit einer Frequenz zwischen 0 und 100 kHz verwendet wird, der kontinuierlich oder unterbrochen ist.

10. Verfahren nach einem der vorherigen Ansprüche, **dadurch gekennzeichnet, dass** das thermische Plasma durch ein Hochfrequenzplasma erzeugt wird, das insbesondere durch elektrische Wechselfelder in einem Frequenzbereich von 100 kHz bis 10 MHz, 10 MHz bis 300 MHz oder 300 MHz bis 300 GHz erzeugt wird.

11. Verfahren nach einem der vorherigen Ansprüche, **dadurch gekennzeichnet, dass** als thermisches Plasma ein laserinduziertes Plasma verwendet wird

12. Verfahren nach einem der vorherigen Ansprüche, **dadurch gekennzeichnet, dass** ein nachfolgender Waschschritt erfolgt, der auch durch Ultraschall unterstützt sein kann, und der insbesondere zum Entfernen von im Plasma (8) gebildeten Metallhalogenen, Metallhydroxiden, Metallhydraten und/oder Metalloxiden bzw. Metallmischoxiden geeignet ist.

13. Verfahren nach einem der vorherigen Ansprüche, **dadurch gekennzeichnet, dass** das Einbringen des nanostrukturierten Kohlenstoffmaterials und/oder das Trennen von Prozessgas und nanostrukturiertem Kohlenstoffmaterial kontinuierlich erfolgt.

14. Nanostrukturiertes Kohlenstoffmaterial, hergestellt nach einem Verfahren nach einem der vorherigen Ansprüche.

15. Verbundwerkstoff mit nanostrukturiertem Kohlenstoffmaterial nach Anspruch 14.
